# EUROPEAN PATENT SPECIFICATION

(11) **EP 1 860 112 B1**
(45) Date of publication and mention of the grant of the patent: **19.01.2011**
(21) Application number: 07104461.4
(22) Date of filing: 20.03.2007
(51) Int. Cl.: C07F 7/18, G03G 5/07, G03G 5/147

(54) **Method for forming reactive silane esters**
Verfahren zur Herstellung von reaktiven Silanestern
Procédé de formation d'esters en silane réactif

(30) Priority: 11.04.2006 US 279331
(43) Date of publication of application: 28.11.2007
(73) Proprietor: Xerox Corporation, Rochester, New York 14644 (US)
(72) Inventor: Coggan, Jennifer A., Cambridge Ontario N3C 4L6 (CA); Robinson, Sarah J P, Mississauga Ontario L5J 4M5 (CA); Gaynor, Roger E., Oakville Ontario L6L 5G7 (CA); Bender, Timothy P., Toronto Ontario M8Y 3Y9 (CA); Goodbrand, H Bruce, Hamilton Ontario L8P 4N9 (CA)
(74) Representative: Grünecker, Kinkeldey, Stockmair & Schwanhäusser Anwaltssozietät

(56) References cited:
- EP-A- 1 666 449
- EP-A- 1 669 362
- WO-A-2004/000853
- WO-A-2005/103061
- JP-A- 11 236 391
- JP-A- 2001 354 677
- US-A1- 2006 111 582
- US-A1- 2006 222 977
- VORONKOV M G ET AL: "(Aroyloxymethyl)trifluorosilanes: a new class of pentacoordinate silicon compounds" JOURNAL OF ORGANOMETALLIC CHEMISTRY, vol. 201, no. 1, 18 November 1980 (1980-11-18), pages 165-177, XP002443395 ISSN: 0022-328X
- VORONKOV M G ET AL: "Synthesis, structure and 13C NMR spectra of eso-substituted trialkoxysilyl and silatranylmethyl esters of benzoic acid" JOURNAL OF GENERAL CHEMISTRY OF THE USSR, vol. 55, no. 5, 1985, pages 928-932, XP009086930 ISSN: 0022-1279
- VORONKOV M G ET AL: "(Triorganosilyl)methyl and (1-silatranyl)methyl phenylacetates and 2-phenylbutyrates" JOURNAL OF GENERAL CHEMISTRY OF THE USSR, vol. 53, no. 3, 1983, pages 494-496, XP009086931 ISSN: 0022-1279
- ANDREEV D N ET AL: "The synthesis and properties of organosilicon complex diesters" JOURNAL OF GENERAL CHEMISTRY OF THE USSR, vol. 31, no. 8, 1961, pages 2543-2546, XP009086952 ISSN: 0022-1279
- ANDRIANOV K A ET AL: "Synthesis of (acetoxymethyl)alkoxydimethylsilanes" JOURNAL OF GENERAL CHEMISTRY OF THE USSR, vol. 45, 1975, pages 2614-2618, XP009086986 ISSN: 0022-1279
- VORONKOV M G ET AL: "Bis[(trialkylsilyl)methyl]alkane- and alkene-dioates" JOURNAL OF GENERAL CHEMISTRY OF THE USSR, vol. 55, no. 10, 1985, pages 2046-2047, XP009086985 ISSN: 0022-1279
- FESSENDEN R J ET AL: "Silicon-substituted medicinal agents. Silacarbamates related to meprobamate." JOURNAL OF MEDICINAL CHEMISTRY, vol. 8, no. 5, September 1965 (1965-09), pages 604-608, XP002443396 ISSN: 0022-2623
- NIEDZIELSKI E L: "Preparation of silicononyl alcohol" JOURNAL OF THE AMERICAN CHEMICAL SOCIETY, vol. 62, December 1940 (1940-12), page 3519, XP002443397 ISSN: 0002-7863
- SPEIER J L ET AL: "Chlorides and other derivatives of tetramethylsilane" JOURNAL OF THE AMERICAN CHEMICAL SOCIETY, vol. 70, April 1948 (1948-04), pages 1400-1401, XP002443398 ISSN: 0002-7863

## Description

This disclosure relates generally to improved chemical processes for the synthesis of reactive silane esters for use in producing overcoat layers for electrophotographic imaging members. The present disclosure relates specifically to efficient, scalable methods of making such reactive silane esters.

JP-A-63-65449 (the term "JP-A" as used herein means an "unexamined published Japanese patent application"), discloses an electrophotographic photoreceptor in which fine silicone particles are added to a photosensitive layer, and also discloses that such addition of the fine silicone particles imparts lubricity to a surface of the photoreceptor.

Further, in forming a photosensitive layer, a method has been proposed in which a charge transport substance is dispersed in a binder polymer or a polymer precursor thereof, and then the binder polymer or the polymer precursor thereof is cured. JP-B-5-47104 (the term "JP-B" as used herein means an "examined Japanese patent publication") and JP-B-60-22347, disclose electrophotographic photoreceptors using silicone materials as the binder polymers or the polymer precursors thereof.

Furthermore, in order to improve mechanical strength of the electrophotographic photoreceptor, a protective layer is formed on the surface of the photosensitive layer in some cases. A cross-linkable resin is used as a material for the protective layer in many cases. However, the protective layer formed by the cross-linkable resin acts as an insulating layer, which impairs the photoelectric characteristics of the photoreceptor. For this reason, a method of dispersing a fine conductive metal oxide powder (JP-A-57-128344) or a charge-transport substance (JP-A-4-15659) in the protective layer and a method of reacting a charge-transport substance having a reactive functional group with a thermoplastic resin to form the protective layer have been proposed.

However, even the above-mentioned conventional electrophotographic photoreceptors are not necessarily sufficient in electrophotographic characteristics and durability, particularly when used in combination with a charger of the contact-charging system (contact charger) or a cleaning apparatus, such as a cleaning blade.

Further, when a photoreceptor is used in combination with a contact charger and a toner obtained by chemical polymerization (polymerization toner), a surface of the photoreceptor may become stained with a discharge product produced in contact charging or with polymerization toner that remains after a transport step. This staining can deteriorate image quality in some cases. Still further, use of a cleaning blade to remove discharge product or remaining toner adhered to the photoreceptor surface increases friction and abrasion between the surface of the photoreceptor and the cleaning blade, resulting in a tendency to cause damage to the surface of the photoreceptor, breakage of the blade or turning up of the blade.

Furthermore, in producing a photoreceptor, in addition to improvement in electrophotographic characteristics and durability, reducing production costs becomes an important problem. However, conventional electrophotographic photoreceptors also may have problems relating to coating defects such as orange peel appearances and hard spots.

The use of silicon-containing compounds in photoreceptor layers, including in photosensitive and protective layers, has been shown to increase the mechanical lifetime of electrophotographic photoreceptors, under charging conditions and scorotron charging conditions.

In electrophotography, an electrophotographic substrate containing a photoconductive insulating layer on a conductive layer is imaged by first uniformly electrostatically charging a surface of the substrate. The substrate is then exposed to a pattern of activating electromagnetic radiation, such as, for example, light. The light or other electromagnetic radiation selectively dissipates the charge in illuminated areas of the photoconductive insulating layer while leaving behind an electrostatic latent image in non-illuminated areas of the photoconductive insulating layer. This electrostatic latent image is then developed to form a visible image by depositing finely divided electroscopic marking particles on the surface of the photoconductive insulating layer. The resulting visible image is then transferred from the electrophotographic substrate to a necessary member, such as, for example, an intermediate transfer member or a print substrate, such as paper. This image-developing process can be repeated as many times as necessary with reusable photoconductive insulating layers.

Image forming apparatus such as copiers, printers and facsimiles, including electrophotographic systems for charging, exposure, development, transfer, etc., using electrophotographic photoreceptors have been widely employed. In such image-forming apparatus, there are ever-increasing demands for improving the speed of the image-forming processes, improving image quality, miniaturizing and prolonging the life of the apparatus, reducing production and running costs, etc. Further, with recent advances in computers and communication technology, digital systems and color-image output systems have been applied also to image-forming apparatus.

Electrophotographic imaging members (i.e. photoreceptors) are well known. Photoreceptors having either a flexible belt or a rigid drum configuration are commonly used in electrophotographic processes. Photoreceptors may comprise a photoconductive layer including a single layer or composite layers. These photoreceptors take many different forms. For example, layered photo-responsive imaging members are known in the art. U.S. Patent No. 4,265,990 to Stolka et al. describes a layered photoreceptor having separate photo-generating and charge-transport layers. The photo-generating layer disclosed in the 990 patent is capable of photo-generating holes and injecting the photo-generated holes into the charge-transport layer. Thus, in the photoreceptors of the 990 patent, the photo-generating material generates electrons and holes when subjected to light.

More advanced photoconductive photoreceptors containing highly specialized component layers are also known. For example, multilayered photoreceptors may include one or more of a substrate, an undercoating layer, an intermediate layer, an optional hole- or charge-blocking layer, a charge-generating layer (including a photo-generating material in a binder) over an undercoating layer and/or a blocking layer, and a charge-transport layer (including a charge-transport material in a binder). Additional layers, such as one or more overcoat layer or layers, may be included as well.

In view of such a background, improvement in electrophotographic properties and durability, miniaturization, reduction in cost, etc., in photoreceptors have been studied, and photoreceptors using various materials, including cross-linked siloxane materials, have been proposed.

However, there are shortcomings associated with current methods for producing reactive silane esters, such as for use in producing overcoat layers for electrophotographic imaging members. For example, current processes are generally lengthy, result in low product yields, and produce crude products containing variable amounts of impurities and oligomers, necessitating further tedious and non-scalable purification procedures.

Thus, there still remains a need for improved methods for preparing reactive silane esters that will produce high yields of the desired compounds, and there remains a need for efficient, scalable methods for preparing the reactive silane esters.

JP-A-2001-354677 discloses a method for producing a photofunctional organosilicon compound comprising the step of reacting a specific photofunctional compound with a specific silicon compound.

JP-A-11-236391 discloses an organosilicon compound prepared from a specific carboxylic acid compound and a specific silane compound.

WO-A-2005/103061 discloses a process for the preparation of an organoalkoxysilane having ester groups in which an alkali metal salt of a carboxylic acid is reacted with an organoalkoxysilane having halogen-substituted organic groups.

WO-A-2004/000853 discloses a method in which a salt of a carboxylic acid is reacted with a halogen-substituted organosilicon compound in order to obtain a silyl alkyl ester.

The present disclosure provides a one-pot, two-step method of preparing reactive silane esters from carboxylic acid compounds. The disclosed processes provide the desired reactive silane esters in a scaleable process and in high purity.

The process of embodiments differs from current processes by the use of a solid base in the acid-base reaction rather than a liquid base. Use of a solid base rather than a liquid base, in particular, allows for such benefits as the solid base is much easier to handle in large quantities and, for some solid bases, no water is produced during the reaction such that water does not need to be removed during the course of the reaction such as by azeotropic distillation. Further, the crude reaction product is relatively pure, compared to previous conditions, which leads to shorter purification times. Also, the processes of the disclosure allow for increased reaction throughput. This produces an efficient, scaleable process that provides the desired product in high yield and in a faster process.

The present invention provides a method for preparing reactive silane esters, comprising:
providing a carboxylic acid-containing starting material;
reacting said carboxylic acid-containing starting material with a solid base to form a salt, wherein said base has the general formula MOR, in which O is oxygen, M is a metal atom selected from the group consisting of potassium, sodium, lithium, calcium and magnesium, and R is hydrogen or a straight or branched alkyl group selected from the group consisting of ethyl, propyl, butyl, pentyl, hexyl, heptyl, octyl, nonyl, and decyl groups; and
reacting said salt with a halo-alkylene-silane to form a reactive silane ester compound.

Preferred embodiments of the invention are set forth in the sub-claims.
FIG. 1 is a schematic cross sectional view showing an embodiment of an electrophotographic photoreceptor.
FIG. 2 is a schematic view showing an embodiment of an image forming apparatus.
FIG. 3 is a schematic view showing another embodiment of an image forming apparatus.

This disclosure is not limited to particular embodiments described herein, and some components and processes may be varied by one of skill, based on this disclosure. The terminology used herein is for the purpose of describing particular embodiments only, and is not intended to be limiting.

In this specification and the claims that follow, singular forms such as "a," "an," and "the" include plural forms unless the content clearly dictates otherwise. In addition, reference may be made to a number of terms that shall be defined as follows:

The term "organic molecule" refers, for example, to any molecule that is made up predominantly of carbon and hydrogen, such as, for example, alkanes and arylamines. The term "heteroatom" refers, for example, to any atom other than carbon and hydrogen. Typical heteroatoms included in organic molecules include oxygen, nitrogen, sulfur and the like.

The term "saturated" refers, for example, to compounds containing only single bonds. The term "unsaturated" refers, for example, to compounds that contain one or more double bonds and/or one or more triple bonds.

The terms "hydrocarbon" and "alkane" refer, for example, to branched and unbranched molecules having the general formula CₙH₂ₙ₊₂, in which n is a number of 1 or more, such as of from 1 to 60. Exemplary alkanes include methane, ethane, n-propane, isopropane, n-butane, isobutane, tert-butane, octane, decane, tetradecane, hexadecane, eicosane, tetracosane and the like. Alkanes may be substituted by replacing hydrogen atoms with one or more functional groups. The term "aliphatic" refers, for example, to straight-chain molecules, and may be used to describe acyclic, unbranched alkanes. The term "long-chain" refers, for example, to hydrocarbon chains in which n is a number of from 8 to 60, such as from 20 to 45 or from 30 to 40. The term "short-chain" refers, for example, to hydrocarbon chains in which n is a number of from 1 to 7, such as from 2 to 5 or from 3 to 4.

The term "alkyl" refers, for example, to a branched or unbranched saturated hydrocarbon group, derived from an alkane and having the general formula CₙH₂ₙ₊₁, in which n is a number of I or more, such as of from 1 to 60. Exemplary alkyl groups include methyl, ethyl, n-propyl, isopropyl, n-butyl, isobutyl, tert-butyt, octyl, decyl, tetradecyl, hexadecyl, eicosyl, tetracosyl and the like. The term "lower alkyl" refers, for example, to an alkyl group of from 1 to 12 carbon atoms.

The term "alkylene" refers, for example, to a branched or unbranched saturated hydrocarbon group of 1 to 12 carbon atoms and having two bonds to other portions of the molecule. Exemplary alkylene groups have the structure -(CH₂)ₐ-, in which a is an integer in a range of from 1 to 12.

The term "alkene" refers, for example, to branched and unbranched unsaturated molecules that are derived from alkenes and include one or more double bonds between carbon atoms. Exemplary alkanes include ethene, propene, butene, butadiene, octene, decene, tetradecene, hexadecene, eicosene, tetracosene and the like. Alkenes may be substituted by replacing hydrogen atoms with one or more functional groups.

The term "alkenyl" refers, for example, to a branched or unbranched unsaturated hydrocarbon group containing one or more double bond and derived from an alkene. Exemplary alkenyl groups include ethenyl, propenyl, butenyl, octenyl, decenyl, tetradecenyl, hexadecenyl, eicosenyl, tetracosenyl and the like. The term "lower alkenyl" refers, for example, to an alkenyl group of from 1 to 12 carbon atoms.

The term "alkyne" refers, for example, to branched and unbranched unsaturated molecules that are derived from alkanes and include one or more triple bonds between carbon atoms. Exemplary alkynes include ethyne, propyne, butyne, octyne, decyne, tetradecyne, hexadecyne, eicosyne, tetracosyne and the like. Alkynes may be substituted by replacing hydrogen atoms with one or more functional groups.

The term "alkynyl" refers, for example, to a branched or unbranched unsaturated hydrocarbon group containing one or more triple bond and derived from an alkyne. Exemplary alkynyl groups include ethynyl, propynyl, butynyl, octynyl, decynyl, tetradecynyl, hexadecynyl, eicosynyl, tetracosynyl and the like. The therm "lower alkynyl" refers, for example, to an alkynyl group of from 1 to 12 carbon atoms.

The term "aromatic" refers, for example, to an organic molecule or radical in which some of the bonding electrons are delocalized or shared among several atoms within the molecule and not localized in the vicinity of the atoms involved in the bonding. Aromatic compounds may include heteroatoms in the molecules, and may include one or more cyclic or ring systems that may include one or more fused aromatic rings. Examples of aromatic compounds include, for example, benzene (C₆H₆), naphthalene (C₁₀H₈), anthracene (C₁₄H₁₀), pyridine (C₅H₅N) and the like. Optionally, these aromatic compounds may be substituted with one or more independently selected substituents, including alkyl, alkenyl, alkoxy, aryl, hydroxyl and nitro groups.

The term "aryl" refers, for example, to an organic group derived from an aromatic compound and having the same general structure as the aromatic compound. Examples of aromatic compounds include, for example, phenyl (C₆H₅), benzyl (C₇H₇), naphthyl (C₁₀H₇), anthracyl (C₁₄H₉), pyridinyl (C₅H₄N) and the like. Optionally, these aromatic groups may be substituted with one or more independently selected substituents, including alkyl, alkenyl, alkoxy, aryl, hydroxyl and nitro groups.

The term "arylamine" refers, for example, to moieties containing both aryl and amine groups. Exemplary aralkylene groups have the structure Ar-NRR', in which Ar represents an aryl group and R and R' are groups that may be independently selected from hydrogen and substituted and unsubstituted alkyl, alkenyl, aryl and other suitable functional groups. The term "triarylamine" refers, for example, to arylamine compounds having the general structure NArAr'Ar", in which Ar, Ar' and Ar" represent independently selected aryl groups.

The term "alkoxy" refers, for example, to an alkyl group bound through a single, terminal ether linkage; that is, an "alkoxy" group is defined as -OR in which R is an alkyl as defined above. A "lower alkoxy" refers, for example, to an alkoxy group containing 1 to 6 carbon atoms.

The term "aralkylene" refers, for example, to moieties containing both alkylene and monocyclic species, typically containing less than 12 carbon atoms in the alkylene portion, and wherein the aryl substituent is bonded to the structure of interest through an alkylene linking group. Exemplary aralkylene groups have the structure -(CH₂)ₐ-Ar, in which Ar represents an aryl group and a is an integer in a range of from 1 to 6.

The term "siloxane" refers, for example, to compounds containing silicon atoms bound to oxygen atoms and to organic groups. Exemplary siloxanes have the structure ROSiR'R"R"', in which O represents oxygen, Si represents silicon and R, R', R" and R"' represent independently selected organic groups, such as alkyl, alkenyl, alkynyl, alkoxy and other suitable groups.

"Alcohol" refers, for example, to an alkyl moiety in which one or more of the hydrogen atoms has been replaced by an -OH group. The term "lower alcohol" refers, for example, to an alkyl group of 1 to 6 carbon atoms in which at least one, and optionally all, of the hydrogen atoms has been replaced by an -OH group. The term "primary alcohol" refers, for example to alcohols in which the -OH group is bonded to a terminal or chain-ending carbon atom, such as in methanol, ethanol, 1-propanol, 1-butanol, 1-hexanol and the like. The term "secondary alcohol" refers, for example to alcohols in which the -OH group is bonded to a carbon atom that is bonded to one hydrogen atom and to two other carbon atoms, such as in 2-propanol (isopropanol), 2-butanol, 2-hexanol and the like. The term "tertiary alcohol" refers, for example to alcohols in which the -OH group is bonded to a carbon atom that is bonded to three other carbon atoms, such as in methylpropanol (tert-butanol) and the like.

The terms "halogen" or "halogen atom" refer, for example, to atoms of the elements fluorine (F), chlorine (Cl), bromine (Br), iodine (I) and astatine (At). The term "halo" refers, for example, to substitution of a halogen atom for a hydrogen atom in an organic compound. "Haloalkyl" refers, for example, to an alkyl moiety in which one or more of the hydrogen atoms has been replaced by a halogen atom. The term "lower haloalkyl" refers, for example, to an alkyl group of 1 to 6 carbon atoms in which at least one, and optionally all, of the hydrogen atoms has been replaced by a halogen atom. The term "perhalogenated" refers, for example, to a compound in which all of the hydrogen atoms have been replaced by halogen atoms, while the phrase "partially halogenated" refers, for example, to a compound in which less than all of the hydrogen atoms have been replaced by halogen atoms.

The term "derivative" refers, for example, to compounds that are derived from another compound and maintain the same general structure as the compound from which they are derived. For example, saturated alcohols and saturated amines are derivatives of alkanes.

The term "room temperature" refers, for example, to temperatures in a range of from 20°C to 25°C.

"Optional" or "optionally" refer, for example, to instances in which subsequently described circumstance may or may not occur, and include instances in which the circumstance occurs and instances in which the circumstance does not occur.

The terms "one or more" and "at least one" refer, for example, to instances in which one of the subsequently described circumstances occurs, and to instances in which more than one of the subsequently described circumstances occurs.

In embodiments, "soluble" refers, for example, to the specified material being substantially soluble in the respective solvent, although complete (100%) solubility is not necessarily required. Likewise, in embodiments, "insoluble" refers, for example, to the specified material being substantially insoluble in the respective solvent, although complete (100%) insolubility is not necessarily required.

Reactive silane ester materials can be used as precursor materials for silicone-based hard coats or overcoats in imaging members or photoreceptors used in xerographic or electrostatographic printers. An example of reactive silane ester suitable for use in forming a silicone hard coat in a photoreceptor is the reactive silane ester of Formula I:

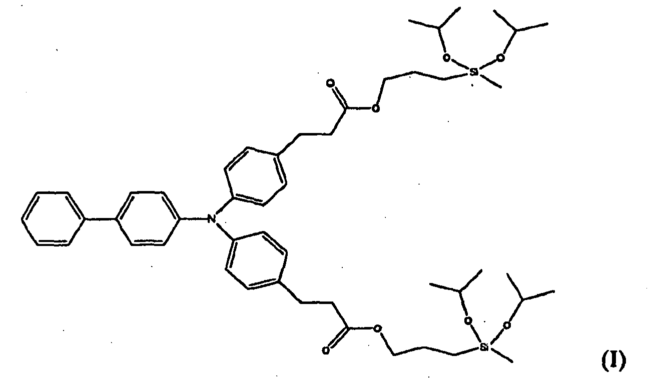

The silane ester of Formula I can be formed by forming a salt of a dicarboxylic acid of Formula II: 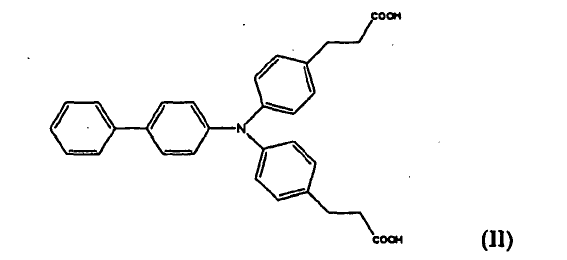 and then reacting the formed salt with an alkyl halide containing a siloxane group. The dicarboxylic acid of Formula II can be converted to a salt, such as a dipotassium salt, by an acid-base reaction between the dicarboxylic acid and potassium t-butoxide in a solvent system such as a DMF-isopropanol mixture. A benefit of this reaction is that water is not produced by the reaction, and thus need not be removed by means such as azeotropic distillation. In a second step, which can be conducted in the same reactor vessel (or pot) the resulting salt, such as a resulting dipotassium salt, is reacted with a dialkoxy silane that includes a halogenated alkyl group, such as, for example, 3-iodopropyl methyl diisopropoxy silane. The dipotassium salt undergoes a condensation reaction with the silane to form a silane ester, such as, for example, the silane ester of Formula I.

A method is thus provided for preparing reactive silane esters by a one-pot two-step reaction, starting with the reaction of a carboxylic acid compound, such as an aromatic carboxylic acid starting compound, with a base in a solvent system to form a salt, followed by reacting the salt with a halo-alkylene-silane compound to provide the final product. For example, aromatic silicon-containing compound of the formula (I) above can be prepared by the following reaction: 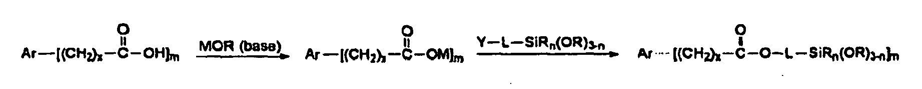 in which Ar represents any suitable aromatic group, such as an arylamine; Y represents a halogen atom selected from a group consisting of I, Br, Cl and F; L represents a divalent linking group, such as an alkyl group; each R independently represents a hydrogen atom, an alkyl group such as a lower alkyl group, or an aryl group; n is an integer of from 0 to 2; x is an integer of from 0 to 25; and m is an integer of from 1 to 5. In the embodiments of an aromatic reactive silane ester formed by this method, the compound can generally be an aromatic silane compound, i.e., a compound having one or more silane groups separated by a linking group that is or contains one or more aromatic groups.

Examples of suitable starting materials generally include any materials that are substituted by one or more groups capable of forming divalent linkages by the described reaction. For example, suitable in embodiments as starting materials are substituted aromatic compounds in which one or more aryl groups (Ar) are substituted by one or more groups capable of forming divalent linkages such as carboxylic acid groups. Suitable substituted aromatic compounds thus include carboxylic acids, such as a dicarboxylic acid, where the carboxylic acid reacts in the acid-base reaction to form a salt, which is subsequently reacted to form the desired reactive silane ester. In particular embodiments, the starting material is an aromatic carboxylic acid, such as an arylamine carboxylic acid.

For example, the starting compound can be any suitable arylamine compound such as a compound of the formula: 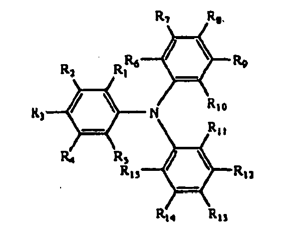 where R¹-R¹⁵, which can be the same or different, can be suitably selected to represent hydrogen, a halogen, an alkyl group having for example from 1 to 20 carbon atoms, an aryl group optionally substituted by one or more alkyl groups, an alkyl group containing a heteroatom, an aryl group containing a heteroatom and optionally substituted by one or more alkyl groups, and the like, but where at least one of R¹-R¹⁵ is substituted by at least one carboxylic acid group or by at least one alkyl carboxylic acid group where the alkyl chain can be straight or branched, substituted or unsubstituted, and can have from 1 to 20 or 30 or more carbon atoms. In embodiments, the arylamine is a diphenylamine derivative, such as a disubstituted 4-aminobiphenyl compound of the formula (II) above.

In the method of embodiments, the starting carboxylic acid compound is reacted with a base to form a salt. Bases that may be used in embodiments of the method include bases having the general formula MOR, in which O is oxygen, M is a metal selected from potassium, sodium, lithium, calcium, and magnesium; and R is hydrogen or a straight or branched alkyl group selected from ethyl, propyl, butyl, pentyl, hexyl, heptyl, octyl, nonyl, and decyl groups, such as ethyl, n-propyl, isopropyl, n-butyl, isobutyl, tert-butyl, octyl, decyl and the like. In embodiments, for example, the base may be a potassium tert-butoxide salt. A Solid base is used to provide improved handling, and the like properties.

In embodiments, the starting carboxylic acid material and the base may be reacted in any suitable amounts to provide the desired intermediate salt product. For example, the starting carboxylic acid material and the base may be provided in substantially equivalent amounts based on the number of carboxylic acid groups present in the starting material Alternatively, the base may be provide in an amount greater than a carboxylic acid equivalent amount, to drive the reaction and ensure more complete conversion of carboxylic acid groups to salt groups.

The formation of salts in the method of embodiments may be carried out in any suitable solvent or mixture of solvents. Suitable solvents include, for example, alcohols, such as methanol, ethanol, isopropanol, butanol, and the like; other polar aprotic solvents such as dimethylformamide, dimethylsulfoxide, acetone, ethyl acetate, tetrahydrofuran, methyl ethyl ketone and the like; and mixtures thereof. In an embodiment, a solvent system of isopropanol and dimethylformamide can be used. The choice of specific solvent or mixture of solvents can be decided based on the solubility of the starting materials and products, and will be readily apparent or within routine experimentation to those skilled in the art. Solvents may also be chosen based on the desired operating temperature range.

In embodiments, the solvent may be included in amounts from 75 to 95 % by weight, or from 80 to 90 % by weight, based on the total weight of the reactants.

Salt formation in the method of embodiments may be carried out at temperatures of from 0°C to 100°C, such as from 25°C to 85°C or from 50°C to 75°C or about 70°C. For example, the reaction can be carried out at a temperature below the boiling point of the solvent used in the system. If desired, after the reaction is complete, the temperature can be raised to above the boiling point of the solvent to drive off or distill the solvent, to remove all of most of the solvent from the reactor vessel.

After the salt of the starting carboxylic acid compound is formed, the salt may be optionally isolated and/or purified. However, isolation and purification of the salt are not necessary to achieving high yields of final products with the method of embodiments. In fact, a benefit of embodiments is that the next step can be conducted in the same reactor vessel, or pot, as the first step, without isolation or purification of the products of the first step. Thus, the disclosure provides a one-pot, two-step process. Of course, if desired, the products of the first step can be suitably isolated or purified prior to conducting the second step of the process, and that second step can be conducted in the same or different reactor vessel.

After salt formation, one or more halo-alkylene-silane compounds are added to the reaction mixture. In embodiments, the halo-alkylene-silane compound has the general formula (III):

Y-L-SiRₙ(OR')₃₋ₙ (III),

in which Y is a halogen atom; L represents a divalent linking group; each R is independently chosen from hydrogen atom, lower alkyl groups (such as alkyl groups having 1 to 12 carbon atoms) and aryl groups; and R' is independently chosen from lower, alkyl groups, such as alkyl groups having from 1 to 5 carbon atoms. Suitable examples of L include, but are not limited to: a divalent hydrocarbon group represented by -CₘH₂ₘ-,-CₘH₂ₘ₋₂-, -CₘH₂ₘ₋₄- (m is an integer of 1 to 15, such as from 2 to 10),-CH₂-C₆H₄- or -C₆H₄-C₆H₄-, or a divalent group in which two or more of them are combined. The divalent group may also optionally have a substituent group such as an alkyl group, a phenyl group, an alkoxyl group or an amino group on its side chain. In formula (III), n is an integer, which can be 0, 1 or 2, and m is an integer, which can be from 1 to 10, such as from 1 to 5. Such compounds may be used individually or in combinations of one or more such halo-alkylene-silane compounds. In embodiments, exemplary halo-alkyene-silane compounds include, for example, fluoropropylmethyldiisopropoxysilane, chloropropylmethyldiisopropoxysilane, bromopropylmethyldiisopropoxysilane and iodopropylmethyldiisopropoxysilane, and mixtures thereof.

The silylalkylation reaction of embodiments may be carried out in any suitable solvent or mixture of solvents. Suitable solvents include any polar aprotic solvent, for example, dimethylformamide, or the solvents discussed above for use in the formation of the salt of the substituted aromatic compounds, as well as mixtures of such solvents with additional solvents including alcohols, such as methanol, ethanol, isopropanol and the like; and mixtures thereof. The choice of specific solvent or mixture of solvents can be decided based on the solubility of the starting materials, intermediates and final products, and will be readily apparent or within routine experimentation to those skilled in the art. Solvents may be chosen based on the desired operating temperature range.

Reaction of the salt of the starting carboxylic acid compound with the halo-alkylene-silane compound in the method of embodiments may be carried out at temperatures of from 25°C to 200°C, such as from 50°C to 150°C or from 80°C to 110°C, such as about 90°C. In embodiments, the reaction of the salt of the starting carboxylic acid compound with the halo-alkylene-silane may be conducted at a temperature that is 5°C to 30°C greater than the temperature at which the salt is formed. The reaction may be carried out for 1 min to 5 hours, such as from 30 min to 2 hours.

After the reaction, the product can be isolated by any suitable method or combination of methods, such as solvent extraction. The final product can be purified by any process known in the art, such as distillation, recrystallization, and flash column chromatography.

If purification of the product is desired, then a particularly suitable method of column chromatography can be used to quickly purify the product while still providing a high product yield. For example, the desired final product can be extracted from the reaction mixture using cyclohexane, and the cyclohexane extract / reactive silane ester mixture applied directly into the silica gel chromatography column. Thus, for example, cyclohexane can be added to the reaction product mixture, stirred, and the various resulting phases separated by, for example, a separatory funnel, and optionally washed and dried.

Where column chromatography is used for purification, the proportion of crude cyclohexane extract / reactive silane ester to silica gel in the column can be any suitable amount, although a crude extract mixture to silica gel ratio of from 1:30 to 1:3, such as 1:20 to 1:5 or 1:15 to 1:7 such as about 1:10, in terms of equivalents, can be used. The desired reactive silane ester product can be eluted from the column by any suitable materials, such as a 10% ethyl acetate/cyclohexane mixture. The product can be further collected and concentrated, such as under a reduced pressure, and volatile materials can be removed such as by a Kugelrohr distillation, if desired.

The reactive silane ester compounds produced by this process can be used as final products, for example as aromatic binder materials or as a charge-transport material in electrostatographic imaging members. Alternatively, the reactive silane ester compounds can be further processed and/or reacted to provide other compounds for their separate use. For example, the aromatic silicon-containing compound of formula (I) may be produced by the method of embodiments, hydrolyzed and condensed to form a cross-linked siloxane-containing component, which can be incorporated into a silicon hard overcoat layer of a electrophotographic photoreceptor. The product of hydrolysis and condensation of the aromatic silicon-containing compound can be present in an amount of 5 % to 80 % of the total weight of cross-linked siloxane-containing outmost protective layer. The product of hydrolysis and condensation of the aromatic silicon-containing compound, such as the aromatic silicon-containing compound of formula (I), is present in an amount of 20 % to 60 % of the total weight of the silicon hard overcoat layer. An exemplary electrostatographic imaging member will now be described in greater detail.

In electrophotographic photoreceptors of embodiments, the photoreceptors can include various layers such as undercoating layers, charge-generating layers, charge-transport layers, overcoat layers, and the like. The overcoating layers of embodiments can be a silicon-overcoat layer, which can comprise one or more silicon compounds, a resin, and a charge-transport molecule such as an arylamine.

In embodiments, the resin may be a resin soluble in a liquid component in a coating solution used for formation of a silicon-overcoat layer. Such a resin soluble in the liquid component may be selected based upon the kind of liquid component. For example, if the coating solution contains an alcoholic solvent, a polyvinyl acetal resin such as a polyvinyl butyral resin, a polyvinyl formal resin or a partially acetalized polyvinyl acetal resin in which butyral is partially modified with formal or acetoacetal, a polyamide resin, a cellulose resin such as ethyl cellulose and a phenol resin may be suitably chosen as the alcohol-soluble resins. These resins may be used either alone or as a combination of two or more resins. Of the above-mentioned resins, the polyvinyl acetal resin is particularly suitable in embodiments in terms of electric characteristics.

In embodiments, the weight-average molecular weight of the resin soluble in the liquid component may be from 2,000 to 1,000,000, such as from 5,000 to 50,000. When the weight-average molecular weight is less than 2,000, enhancing discharge-gas resistance, mechanical strength, scratch resistance, particle dispersibility, etc., tend to become insufficient. However, when the weight-average molecular weight exceeds 1,000,000, the resin solubility in the coating solution decreases, and the amount of resin added to the coating solution may be limited and poor film formation in the production of the photosensitive layer may result.

Further, the amount of the resin soluble in the liquid component may be, in embodiments, from 0.1 to 15% by weight, or from 0.5 to 10% by weight, based on the total amount of the coating solution. When the amount added is less than 0.1 % by weight, enhancing discharge-gas resistance, mechanical strength, scratch resistance, particle dispersibility, etc. tend to become insufficient. However, if the amount of the resin soluble in the liquid component exceeds 15% by weight, there is a tendency for formation of indistinct images when the electrophotographic photoreceptor of the disclosure is used at high temperature and high humidity.

There is no particular limitation on the silicon compound used in embodiments of the disclosure, as long as it has at least one silicon atom However, a compound having two or more silicon atoms in its molecule may be used in embodiments. The use of the compound having two or more silicon atoms in its molecule allows both the strength and image quality of the electrophotographic photoreceptor to be achieved at higher levels.

Further, in embodiments, the silicon compounds may include silane coupling agents such as a tetrafunctional alkoxysilane, such as tetramethoxysilane, tetraethoxysilane and the like; a trifunctional alkoxysilane such as methyltrimethoxysilane, methyltriethoxysilane, ethyltrimethoxysilane, methyltrimethoxyethoxysilane, vinyltrimethoxysilane, vinyltriethoxysilane, phenyltrimethoxysilane, γ-glycidoxypropylmethyldiethoxysilane, γ-glycidoxypropyltrimethoxysilane, γ-glycidoxypropyltriethoxysilane, γ-aminopropyltriethoxysilane, γ-aminopropyltrimethoxysilane, γ-aminopropylmethyldimethoxysilane, N-β-(aminoethyl)-γ-aminopropyltriethoxysilane, (tridecafluoro-1,1,2,2-tetrahydrooctyl)triethoxysilane, (3,3,3-trifluoropropyl)-trimethoxysilane, 3-(heptafluoroisopropoxy)propyltriethoxysilane, 1H,1H,2H,2H-perfluoroalkyltriethoxysilane, 1H,1H,2H,2H-perfluorodecyltriethoxysilane or 1H,1H,2H,2H-perfluorooctyltriethoxysilane; a bifunctional alkoxysilane such as dimethyldimethoxysilane, diphenyldimethoxysilane or methylphenyldimethoxysilane; and a monofunctional alkoxysilane such as trimethylmethoxysilane. In order to improve the strength of the photosensitive layer, trifunctional alkoxysilanes and tetrafunctional alkoxysilanes may be used in embodiments, and in order to improve the flexibility and film-forming properties, monofunctional alkoxysilanes and bifunctional alkoxysilanes may be used in embodiments.

Silicone hard-coating agents containing these coupling agents can also be used in embodiments. Commercially available hard-coating agents include KP-85, X-40-9740 and X-40-2239 (available from Shinetsu Silicone Co., Ltd.), and AY42-440, AY42-441 and AY49-208 (available from Toray Dow Corning Co., Ltd.).

Various fine particles can also be added to the silicon compound-containing layer, for example, to further improve the stain adhesion resistance and lubricity of embodiments of the electrophotographic photoreceptor. The fine particles may be used either alone or as a combination of two or more such fine particles. Non-limiting examples of the fine particles include fine particles containing silicon, such as fine particles containing silicon as a constituent element, and specifically include colloidal silica and fine silicone particles. The content of the fine silicone particles in the silicon-containing layer of embodiments may be within the range of 0.1 to 20% by weight, or within the range of 0.5 to 10% by weight, based on the total solid content of the silicon-containing layer.

Colloidal silica used in embodiments as the fine particles containing silicon in the disclosure is selected from an acidic or alkaline aqueous dispersion of the fine particles having an average particle size of 1 to 100 nm, or 10 to 30 nm, and a dispersion of the fine particles in an organic solvent, such as an alcohol, a ketone or an ester, and generally, commercially available particles can be used.

There is no particular limitation on the solid content of colloidal silica in a top-surface layer of the electrophotographic photoreceptor of embodiments. However, in embodiments, colloidal silica may be included in amounts of from 1 to 50% by weight, such as from 5 to 30% by weight, based on the total solid content of the top surface layer, in terms of film forming properties, electric characteristics and strength.

The fine silicone particles used as the fine particles containing silicon in the disclosure may be selected from silicone resin particles, silicone rubber particles and silica particles surface-treated with silicone, which are spherical and have an average particle size of from 1 to 500 nm, such as from 10 to 100 nm, and generally, commercially available particles can be used in embodiments.

In embodiments, the fine silicone particles are small-sized particles that are chemically inactive and excellent in dispersibility in a resin, and further are low in content as may be necessary for obtaining sufficient characteristics. Accordingly, the surface properties of the electrophotographic photoreceptor can be improved without inhibition of the cross-linking reaction. That is to say, fine silicone particles improve the lubricity and water repellency electrophotographic photoreceptor surfaces where incorporated into strong cross-linked structures, which may then be able to maintain good wear resistance and stain-adhesion resistance for a long period of time. The content of the fine silicone particles in the silicon compound-containing layer of embodiments may be from 0.1 to 20% by weight, such as from 0.5 to 10% by weight, based on the total solid content of the silicon compound-containing layer.

Other fine particles that may be used in embodiments include fine fluorine-based particles such as ethylene tetrafluoride, ethylene trifluoride, propylene hexafluoride, vinyl fluoride and vinylidene fluoride, and semiconductive metal oxides such as ZnO-Al₂O₃, SnO₂-Sb₂O₃, In₂O₃-SnO_{z}, ZnO-TiO₂, MgO-Al₂O₃, FeO-TiO₂, TiO₂, SnO₂, In₂O₃, ZnO and MgO.

In conventional electrophotographic photoreceptors, when the above-mentioned fine particles are contained in the photosensitive layer, the compatibility of the fine particles with a charge-transport substance or a binding resin may become insufficient, which causes layer separation in the photosensitive layer, and thus the formation of an opaque film. As a result, the electric characteristics have deteriorated in some cases. In contrast, the silicon compound-containing layer of embodiments (a charge-transport layer in this case) may contain the resin soluble in the liquid component in the coating solution used for formation of this layer and the silicon compound, thereby improving the dispersibility of the fine particles in the silicon compound-containing layer. Accordingly, the pot life of the coating solution may be sufficiently prolonged, and deterioration of the electric characteristics may be prevented.

Further, an additive such as a plasticizer, a surface modifier, an antioxidant, or an agent for preventing deterioration by light can also be used in the silicon compound-containing layer of embodiments. Non-limiting examples of plasticizers that may be used in embodiments include, for example, biphenyl, biphenyl chloride, terphenyl, dibutyl phthalate, diethylene glycol phthalate, dioctyl phthalate, triphenylphosphoric acid, methylnaphthalene, benzophenone, chlorinated paraffin, polypropylene, polystyrene and various fluorohydrocarbons.

The antioxidants may include an antioxidant having a hindered-phenol, hindered-amine, thioether or phosphite partial structure. This is effective for improvement of potential stability and image quality in environmental variation. The antioxidants include an antioxidant having a hindered-phenol, hindered-amine, thioether or phosphite partial structure. This is effective for improvement of potential stability and image quality in environmental variation. For example, the hindered-phenol antioxidants include SUMILIZER BHT-R, SUMILIZER MDP-S, SUMILIZER BBM-S, SUMILIZER WX-R, SUMILIZER NW, SUMILIZER BP-76, SUMILIZER BP-101, SUMILIZER GA-80, SUMILIZER GM and SUMILIZER GS (the above are manufactured by Sumitomo Chemical Co., Ltd.), IRGANOX 1010, IRGANOX 1035, IRGANOX 1076, IRGANOX 1098, IRGANOX 1135, IRGANOX 1141, IRGANOX 1222, IRGANOX 1330, IRGANOX 1425WLj, IRGANOX 1520Lj, IRGANOX 245, IRGANOX 259, IRGANOX 3114, IRGANOX 3790, IRGANOX 5057 and IRGANOX 565 (the above are manufactured by Ciba Specialty Chemicals), and ADECASTAB AO-20, ADECASTAB AO-30, ADECASTAB AO-40, ADECASTAB AO-50, ADECASTAB AO-60, ADECASTAB AO-70, ADECASTAB AO-80 and ADECASTAB AO-330i (the above are manufactured by Asahi Denka Co., Ltd.). The hindered-amine antioxidants include SANOL LS2626, SANOL LS765, SANOL LS770, SANOL LS744, TINUVIN 144, TINUVIN 622LD, MARK LA57, MARK LA67, MARK LA62, MARK LA68, MARK LA63 and SUMILIZER TPS, and the phosphite antioxidants include MARK 2112, MARK PEP·8, MARK PEP·24G, MARK PEP·36, MARK 329K and MARK HP·10. Of these, hindered-phenol and hindered-amine antioxidants may be particularly suitable, in embodiments.

There is no particular limitation on the thickness of the silicon-containing layer, however, in embodiments, the silicon-containing layer may be from 2 to 5 µm in thickness, such as from 2.7 to 3.2 µm in thickness.

The electrophotographic photoreceptor of embodiments may be either a function-separation-type photoreceptor, in which a layer containing a charge-generation substance (charge-generation layer) and a layer containing a charge-transport substance (charge-transport layer) are separately provided, or a monolayer-type photoreceptor, in which both the charge-generation layer and the charge-transport layer are contained in the same layer, as long as the electrophotographic photoreceptor of the particular embodiment has the photosensitive layer provided with the above-mentioned silicon compound-containing layer. The electrophotographic photoreceptor will be described in greater detail below, taking the function-separation-type photoreceptor as an example.

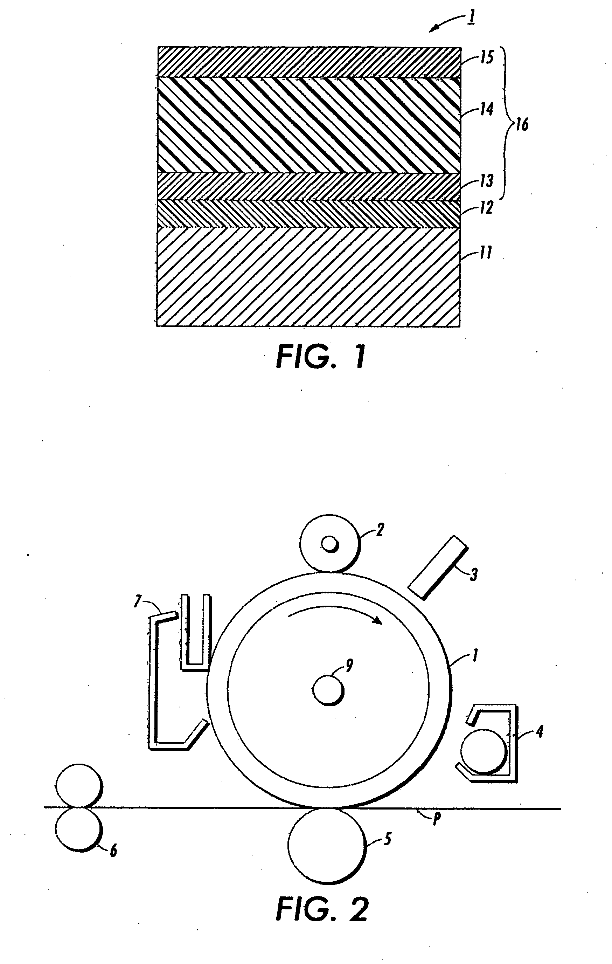

FIG. 1 is a cross-sectional view schematically showing an embodiment of the electrophotographic photoreceptor of the disclosure. The electrophotographic photoreceptor **1** shown in FIG. 1 is a function-separation-type photoreceptor in which a charge-generation layer **13** and a charge-transport layer **14** are separately provided. That is, an underlayer **12,** the charge-generation layer **13,** the charge transport layer **14** and a protective layer **15** are laminated onto a conductive support **11** to form a photosensitive layer **16.** The protective layer **15** contains a resin soluble in the liquid component contained in the coating solution used for formation of this layer and the silicon compound. The various layers of the photoreceptor shown in FIG. 1 are generally known, and are described in detail in the above-mentioned commonly owned and co-pending applications.

The electrophotographic photoreceptor of embodiments should not be construed as being limited to the above-mentioned constitution. For example, the electrophotographic photoreceptor shown in FIG. 1 is provided with the protective layer **15**. However, when the charge transport layer **14** contains the resin soluble in the liquid component in the coating solution used for formation of this layer and the silicon compound, the charge transport layer **14** may be used as a top surface layer (a layer on the side farthest apart from the support **11**) without using the protective layer **15.** In this case, the charge-transport substance contained in the charge transport layer **14** is desirably soluble in the liquid component in the coating solution used for formation of the charge-transport layer **14.** For example, when the coating solution used for formation of the charge-transport layer **14** contains an alcohol solvent, the silicon compounds described above, including arylamine derivatives prepared by processes that include selective hydrogenation by catalytic transfer, can be used as the charge-transport substances. In embodiments, a particularly suitable charge-transport molecule is the following arylamine, which may be produced from the arylamines described herein.

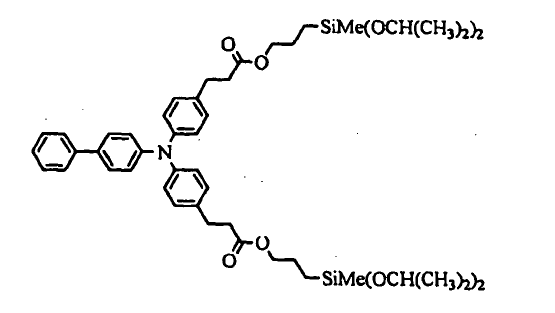

FIG. 2 is a schematic view showing an embodiment of an image forming apparatus or xerographic machine. In the apparatus shown in FIG. 2, an electrophotographic photoreceptor 1 is supported by a support 9, and rotatable at a specified rotational speed in the direction indicated by the arrow, centered on the support 9. A charging device 2, an exposure device 3, a developing device 4, a transfer device 5 and a cleaning unit 7 are arranged in this order along the rotational direction of the electrophotographic photoreceptor 1. Further, this exemplary apparatus is equipped with an image fixing device 6, and a medium P to which a toner image is to be transferred is conveyed to the image fixing device 6 through the transfer device 5.

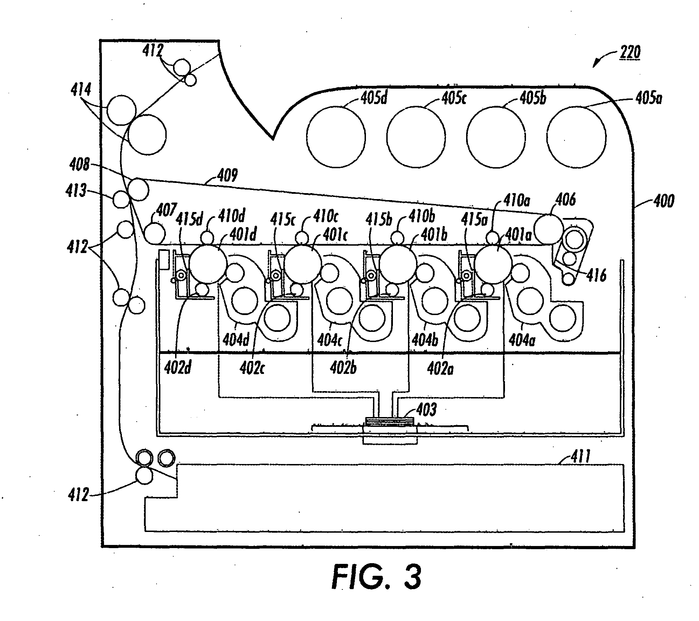

FIG. 3 is a cross-sectional view showing another exemplary embodiment of an image-forming apparatus. The image-forming apparatus **220** shown in FIG. 3 is an image-forming apparatus of an intermediate-transfer system, and four electrophotographic photoreceptors **401a** to **401d** are arranged in parallel with each other along an intermediate-transfer belt **409** in a housing **400.**

Here, the electrophotographic photoreceptors **401a** to **401d** carried by the image-forming apparatus **220** are each the electrophotographic photoreceptors. Each of the electrophotographic photoreceptors **401a** to **401d** may rotate in a predetermined direction (counterclockwise on the sheet of FIG. 3), and charging rolls **402a** to **402d,** developing device **404a** to **404d,** primary transfer rolls **410a** to **410d** and cleaning blades **415a** to **415d** are each arranged along the rotational direction thereof. In each of the developing device **404a** to **404d,** four-color toners of yellow (Y), magenta (M), cyan (C) and black (B) contained in toner cartridges **405a** to **405d** can be supplied, and the primary transfer rolls **410a** to **410d** are each brought into abutting contact with the electrophotographic photoreceptors **401a** to **401d** through an intermediate-transfer belt **409.**

Further, a laser-light source (exposure unit) **403** is arranged at a specified position in the housing **400,** and it is possible to irradiate surfaces of the electrophotographic photoreceptors **401a** to **401d** after charging with laser light emitted from the laser-light source **403.** This performs the respective steps of charging, exposure, development, primary transfer and cleaning in turn in the rotation step of the electrophotographic photoreceptors **401a** to **401d,** and toner images of the respective colors are transferred onto the intermediate-transfer belt **409,** one over the other.

The intermediate-transfer belt **409** is supported with a driving roll 406, a backup roll **408** and a tension roll **407** at a specified tension, and rotatable by the rotation of these rolls without the occurrence of deflection Further, a secondary transfer roll **413** is arranged so that it is brought into abutting contact with the backup roll **408** through the intermediate-transfer belt **409.** The intermediate-transfer belt **409,** which has passed between the backup roll **408** and the secondary transfer roll **413,** is cleaned up by a cleaning blade **416,** and then repeatedly subjected to the subsequent image-formation process.

Further, a tray (tray for a medium to which a toner image is to be transferred) **411** is provided at a specified position in the housing **400.** The medium to which the toner image is to be transferred (such as paper) in the tray 411 is conveyed in turn between the intermediate-transfer belt **409** and the secondary transfer roll **413,** and further between two fixing rolls **414** brought into abutting contact with each other, with a conveying roll **412,** and then delivered out of the housing **400.**

According to the exemplary image-forming apparatus **220** shown in FIG. 3, the use of electrophotographic photoreceptors of embodiments as electrophotographic photoreceptors **401a** to **401d** may achieve discharge gas resistance, mechanical strength, scratch resistance, etc. on a sufficiently high level in the image-formation process of each of the electrophotographic photoreceptors **401a** to **401d.** Accordingly, even when the photoreceptors are used together with the contact-charging devices or the cleaning blades, or further with the spherical toner obtained by chemical polymerization, good image quality can be obtained without the occurrence of image defects such as fogging. Therefore, also according to the image-forming apparatus for color-image formation using the intermediate-transfer body, such as this embodiment, the image-forming apparatus, which can stably provide good image quality for a long period of time, is realized.

The disclosure should not be construed as being limited to the above-mentioned embodiments. For example, each apparatus shown in FIG. 2 or 3 may be equipped with a process cartridge comprising the electrophotographic photoreceptor 1 (or the electrophotographic photoreceptors **401a** to **401d**) and charging device **2** (or the charging devices **402a** to **402d**). The use of such a process cartridge allows maintenance to be performed more simply and easily.

Further, in embodiments, when a charging device of the non-contact charging system such as a corotron charger is used in place of the contact-charging device **2** (or the contact-charging devices **402a** to **402d**), sufficiently good image quality can be obtained.

Specific examples are described in detail below. These examples are intended to be illustrative, and the materials, conditions, and process parameters set forth in these exemplary embodiments are not limiting. All parts and percentages are by weight unless otherwise indicated.

### EXAMPLES

### Example 1

To a 3L 3-necked flask was fitted an argon inlet, mechanical stirrer and thermometer. The flask was charged with 1.1L of isopropanol, 360mL of DMF and 95g of potassium t-butoxide, which was stirred at room temperature until complete dissolution. To this was added 187.2g of N,N-di(4-propanoic acid)-4-aminobiphenyl (the compound of formula (II)) and the temperature was raised to 70°C and stirred for 1 hour until the solution has produced a thick white precipitate. A further 730ml of DMF was added. The reaction was set up for distillation and the temperature was raised for distillation of the isopropanol (b.p. 82°C) to occur rapidly. Approximately 600mL of isopropanol was removed by distillation. The temperature was set at 90°C and 279g of 3-iodopropyl methyl diisopropoxy silane was added. The reaction was stirred at 90°C for 1.5 hours after which time the reaction was cooled to room temperature. To the room temperature reaction was added 1.2L of cyclohexane and 100mL of water. This mixture was stirred for a few minutes and then the reaction mixture was poured into a separatory funnel and the DMF layer was removed. The cyclohexane layer was washed with 1L of a 50% brine solution. The organic layer was removed, dried (MgSO₄) and the MgSO₄ removed by filtration. The crude material was purified by column chromatography with 10 equivalents of silica gel, the material was added directly to the column in the cyclohexane extract and the material eluted with a 10% ethyl acetate/cyclohexane mixture. The appropriate fractions were collected and concentrated under reduced pressure to give 280g (80% yield) of a yellow oil. Volatile materials were removed by Kugelrohr distillation at 180°C for 2 hours to give 265g (77% yield) of a yellow oil.

### Examples 2-9

Batches of the product of Example 1 were subjected to various purification processes. In particular, batches of the product were subjected to purification as follows:

| Example | Purification method | SiO₂:Crude ratio | Crude extract solvent | Elution solvents |
|---|---|---|---|---|
| 2 | Filtration method | 5:1 | cyclohexane | 10% ethyl acetate/cyclohexane |
| 3 | Filtration method | 5:1 | Cyclohexane | 10% ethyl acetate/cyclohexane |
| 4 | Column method | 5:1 | Cyclohexane | 10% ethyl acetate/cyclohexane |
| 5 | Column method | 10:1 | Cyclohexane | 10% ethyl acetate/cyclohexane |
| 6 | Column method | 5:1 | Cyclohexane | 5% ethyl acetate/toluene |
| 7 | Column method | 10:1 | Toluene | 5% ethyl acetate/toluene |
| 8 | Column method | 10:1 | Toluene | 5% ethyl acetate/toluene |
| 9 | Column method | 10:1 | Toluene | 5% ethyl acetate/toluene |

The product yield, purity of desired product, and percent presence of undesired oligomers were measured both as obtained from the production method, and after the purification methods. Purity of desired product was measured by HPLC, and percent presence of undesired oligomers was measured by GPC. The results are shown in the following Table, as compared to a control sample obtained from a current production and purification process.

| Example | Chemical Analysis, as produced | | | Chemical Analysis, as purified | | |
|---|---|---|---|---|---|---|
| | Yield (%) | Product (%) | Oligomer (%) | Yield(%) | Product (%) | Oligomer (%) |
| 2 | N/I | 93.33 | 2.47 | 81 | 98.75 | 1.65 |
| 3 | N/I | 92.12 | 1.27 | 79 | 99.59 | 0.93 |
| 4 | N/I | 92.78 | 1.89 | 72 | 98.90 | 1.19 |
| 5 | 95 | 92.86 | 6.46 | 79 | 100.0 | 0.0 |
| 6 | 95 | 92.86 | 2.31 | 64 | 100.0 | 0.71 |
| 7 | 95 | 92.86 | 2.31 | 75 | 99.14 | 0.0 |
| 8 | 93 | 91.66 | 3.06 | 72 | 99.71 | 0.0 |
| 9 | 91 | 92.52 | 2.80 | 76 | 100.0 | 0.0 |
| Control | N/A | N/A | N/A | N/A | 99.34 | 0.0 |

| | | | | | | |
|---|---|---|---|---|---|---|
| Notes: N/I = not isolated N/A = not available | | | | | | |

### Example 10

Large scale synthesis of aromatic silicon-containing compound.

A 50 gallon reactor is charged with 10 kg DMF and then 36 kg of isopropanol and 4 kg of potassium t-butoxide are added under agitation and nitrogen. The reactor is then charged with 7.5 kg of N,N-di(4-propanoic acid)-4-aminobiphenyl (the compound of formula (II)) and the reactor temperature is increased to 70°C, and held at that temperature for 2 hours. Approximately 90 minutes later, 28 kg of DMF is added to the reactor and the temperature is increased to 100°C and the IPA distillation begun. Once approximately 20 kg of IPA has been removed, the reactor is cooled to 80°C. 11.72 kg of 3-iodopropyl methyl diisopropoxy silane is then added to the reactor. The reactor jacket temperature is then increased to 90°C and the reaction is to continue at 90°C for 1.5-2 hours. When the reaction is complete, full cooling is applied and the batch is cooled to room temperature. Once the temperature is reduced to 25°C, 36 kg of cyclohexane is added to the reactor and agitation is continued for 30 minutes. The slurry is then passed through a bag filter apparatus and the reactor and bag filters are rinsed with 10 kg of Cyclohexane 5 kg of water is added and the layers are allowed to separate. The bottom layer is removed and then 40 kg of brine solution (10 kg NaCl in 30 kg water) is added. The bottom layer is again removed and then the reactor is then charged with 6 kg of magnesium sulphate. The slurry is then passed through a bag filter apparatus and the final product solution is collected. The reactor and bag filters are rinsed through with 10 kg of cyclohexane. The final product solution is applied onto a silica gel column in cyclohexane and the product eluted with a mixture of 10% ethyl acetate and cyclohexane. The fractions from the column containing the pure product are pumped into a reactor where the volatiles are removed by vacuum distillation. The yield was 11.1 kg (79 %). The desired structure of the product was confirmed by ¹H NMR spectroscopy, high performance liquid chromatography and gel permeation chromatography.

The results of these Examples demonstrate that the process of Example 1 can be used to readily and scaleably produce the desired reactive silane ester in high yield, which can subsequently readily be purified by directly introducing the crude product into the silica gel column while it was still in the cyclohexane extract.

### Examples 11-18

The purified products of Examples 2-9 were formulated into overcoating layer formulations. The reactive silane esters were generally formulated into coating compositions as follows:

2.75 parts of the reactive silane ester, 1.5 parts of binder material of the formula: 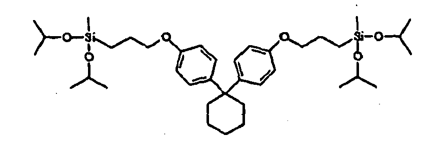 and 2.75 parts methanol were mixed, and 0.275 parts of an ion exchange resin (AMBERLIST H15) was added thereto, followed by stirring for 2 hours. Furthermore, 8 parts of butanol and 1.23 parts distilled water were added to this mixture, followed by stirring at room temperature for 20 minutes for polymerization to proceed. Then, the resulting mixture was filtered to remove the ion exchange resin, and 0.045 parts of aluminum trisacetylacetonate (Al(AcAc)₃), 0.045 parts of acetylacetone (AcAc), 0.5 parts of a polyvinyl butyral resin, 0.045 parts of butylated-hydroxytofuene (BHT) and 0.065 parts of a hindered phenol antioxidant (IRGANOX 259) were added to a filtrate obtained, and thoroughly dissolved therein for 3 hours and shaken overnight to obtain a clear coating solution for a protective layer. This coating solution was applied onto a charge transfer layer by dip coating (coating speed: about 170 mm/min), and dried by heating at 130°C for one hour to form the protective layer having a film thickness of 3 µm, thereby obtaining a desired electrophotographic photoreceptor.

An example of the results from two photoreceptor drums plus one control drum that were coated show that the obtained thicknesses were within the standard thickness range for proper photoreceptor function. HMT cycling of the photoreceptors showed that the photoreceptors behaved as expected, having stable cycling behavior to 170 kcycles. The results are presented in the following table:

| Example | Sample Example | Qualified | Coating quality | Potlife at 40°C | HMT @ 140Kcycle (ΔVlow) |
|---|---|---|---|---|---|
| 11 | 2 | Yes | Pass | Pass | 7 |
| 12 | 3 | Yes | Pass | Pass | 28 |
| 13 | 4 | Yes | Pass | Pass | 18 |
| 14 | 5 | Yes | Pass | Pass | -4 |
| 15 | 6 | Yes | Pass | Pass | 17 |
| 16 | 7 | Yes | Pass | Pass | 22 |
| 17 | 8 | Yes | Pass | Pass | 25 |
| 18 | 9 | Yes | Pass | Pass | 36 |
| Control | Control | Yes | Pass | Pass | 11 |

## Claims

1. A method for preparing reactive silane esters, comprising:
providing a carboxylic acid-containing starting material;
reacting said carboxylic acid-containing starting material with a solid base to form a salt, wherein said base has the general formula MOR, in which O is oxygen, M is a metal atom selected from the group consisting of potassium, sodium, lithium, calcium and magnesium, and R is hydrogen or a straight or branched alkyl group selected from the group consisting of ethyl, propyl, butyl, pentyl, hexyl, heptyl, octyl, nonyl, and decyl groups; and
reacting said salt with a halo-alkylene-silane to form a reactive silane ester compound.

2. The method of claim 1, wherein the carboxylic acid-containing starting material is of the formula 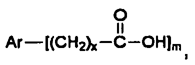 the halo-alkylene-silane is of the formula Y-L-SiRₙ(OR)₃₋ₙ, and the reactive silane ester compound is of the formula 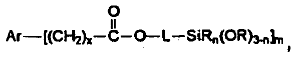 wherein:
Ar represents an aromatic group;
Y represents a halogen atom selected from the group consisting of I, Br, CI and F;
L represents a divalent linking group;
each R independently represents a hydrogen atom, an alkyl group, or an aryl group;
n is an integer of from 0 to 2;
x is an integer of from 0 to 25; and
m is an integer of from 1 to 5.

3. The method of claim 2, wherein the carboxylic acid-containing starting material is an arylamine of the formula: 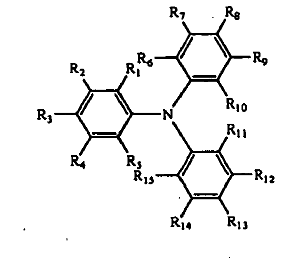 wherein R¹-R¹⁵, which can be the same or different, are selected from the group consisting of hydrogen, a halogen, an alkyl group, an aryl group optionally substituted by one or more alkyl groups, an alkyl group containing a heteroatom, and an aryl group containing a heteroatom and optionally substituted by one or more alkyl groups, provided that at least one of R¹-R¹⁵ is substituted by at least one carboxylic acid group or an alkyl group with a carboxylic group attached.

4. The method of claim 1, wherein the carboxylic acid-containing starting material is of the formula: 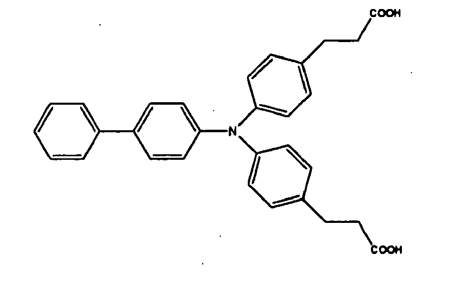 and the reactive silane ester compound is of the formula:

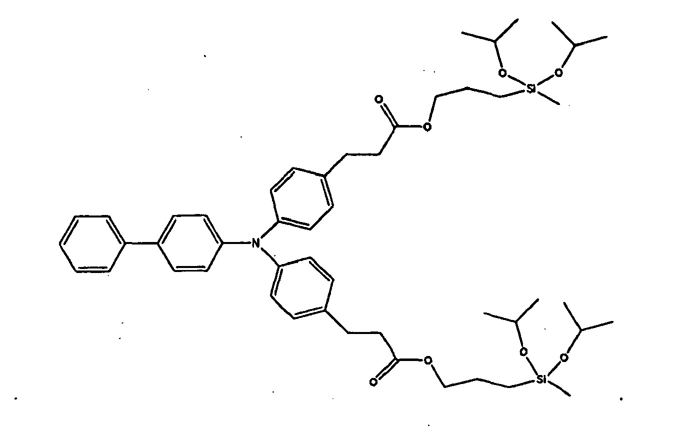

5. The method of claim 1, wherein said carboxylic acid-containing starting material and said base are reacted in substantially equivalent amounts based on a number of carboxylic acid groups present in the starting material.

6. The method of claim 1, wherein said reacting said carboxylic acid-containing starting material with said base to form said aromatic salt is conducted in the presence of a first solvent.

7. The method of claim 1, wherein said reacting said carboxylic acid-containing starting material with said base to form said salt is conducted at a temperature of from 0°C to 100°C.

8. The method of claim 1, wherein said reacting said salt with said halo-alkylene-silane to form said reactive silane ester compound is conducted in the presence of a second solvent.

9. The method of claim 1, wherein said reacting said salt with said halo-alkylene-silane to form said reactive silane ester compound is conducted at a temperature of from 25°C to 200°C.

## Patentansprüche

1. Verfahren zum Herstellen von reaktiven Silanestern, umfassend:
das Bereitstellen eines carbonsäurehaltigen Ausgangsmaterials;
das Umsetzen des carbonsäurehaltigen Ausgangsmaterials mit einer festen Base, um ein Salz zu bilden, wobei die Base die allgemeine Formel MOR aufweist, in welcher O Sauerstoff ist, M ein Metallatom, ausgewählt aus der Gruppe bestehend aus Kalium, Natrium, Lithium, Calcium und Magnesium, ist, und R Wasserstoff oder eine gerade oder verzweigte Alkylgruppe, ausgewählt aus der Gruppe bestehend aus Ethyl-, Propyl-, Butyl-, Pentyl-, Hexyl-, Heptyl-, Octyl-, Nonyl- und Decylgruppen, ist; und
das Umsetzen des Salzes mit einem Halogen-Alkylen-Silan, um eine reaktive Silanesterverbindung zu bilden.

2. Verfahren nach Anspruch 1, wobei das carbonsäurehaltige Ausgangsmaterial die Formel 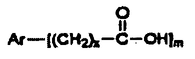 aufweist, das Halogen-Alkylen-Silan die Formel Y-L-SiRₙ(OR)₃₋ₙ aufweist, und die reaktive Silanesterverbindung die Formel 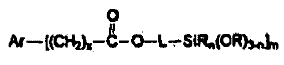 aufweist, wobei:
Ar eine aromatische Gruppe bedeutet;
Y ein Halogenatom, ausgewählt aus der Gruppe bestehend aus I, Br, Cl und F, bedeutet;
L eine zweiwertige Verbindungsgruppe bedeutet;
jedes R unabhängig ein Wasserstoffatom, eine Alkylgruppe oder eine Arylgruppe bedeutet;
n eine ganze Zahl von 0 bis 2 ist;
x eine ganze Zahl von 0 bis 25 ist; und
m eine ganze Zahl von 1 bis 5 ist.

3. Verfahren nach Anspruch 2, wobei das carbonsäurehaltige Ausgangsmaterial ein Arylamin der folgenden Formel ist: 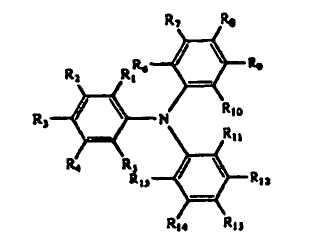 wobei R¹-R¹⁵, welche gleich oder verschieden sein können, ausgewählt sind aus der Gruppe bestehend aus Wasserstoff, einem Halogen, einer Alkylgruppe, einer Arylgruppe, die gegebenenfalls durch eine oder mehrere Alkylgruppen substituiert ist, einer Alkylgruppe, die ein Heteroatom enthält, und einer Arylgruppe, die ein Heteroatom enthält und gegebenenfalls durch eine oder mehrere Alkylgruppen substituiert ist, vorausgesetzt, dass wenigstens eines von R¹-R¹⁵ durch wenigstens eine Carbonsäuregruppe oder eine Alkylgruppe mit einer daran gebundenen Carboxylgruppe substituiert ist.

4. Verfahren nach Anspruch 1, wobei das carbonsäurehaltige Ausgangsmaterial die Formel aufweist: 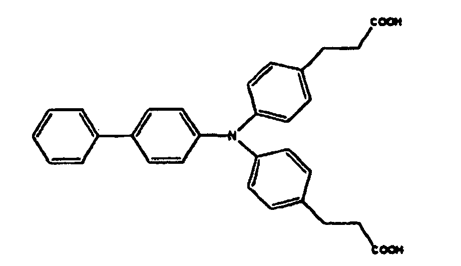 und die reaktive Silanesterverbindung die Formel aufweist:

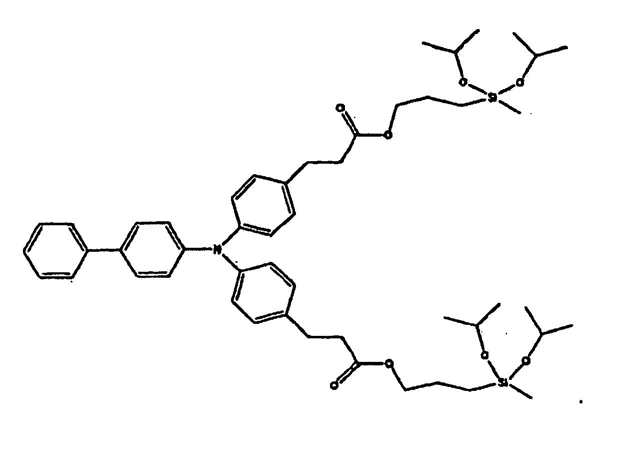

5. Verfahren nach Anspruch 1, wobei das carbonsäurehaltige Ausgangsmaterial und die Base in im Wesentlichen äquivalenten Mengen, bezogen auf eine Anzahl von Carbonsäuregruppen, die in dem Ausgangsmaterial vorhanden sind, miteinander umgesetzt werden.

6. Verfahren nach Anspruch 1, wobei das Umsetzen des carbonsäurehaltigen Ausgangsmaterials mit der Base zum Bilden des aromatischen Salzes in Gegenwart eines ersten Lösungsmittels durchgeführt wird.

7. Verfahren nach Anspruch 1, wobei das Umsetzen des carbonsäurehaltigen Ausgangsmaterials mit der Base zum Bilden des Salzes bei einer Temperatur von 0 °C bis 100 °C durchgeführt wird.

8. Verfahren nach Anspruch 1, wobei das Umsetzen des Salzes mit dem Halogen-Alkylen-Silan zum Bilden der reaktiven Silanesterverbindung in Gegenwart eines zweiten Lösungsmittels durchgeführt wird.

9. Verfahren nach Anspruch 1, wobei das Umsetzen des Salzes mit dem Halogen-Alkylen-Silan zum Bilden der reaktiven Silanesterverbindung bei einer Temperatur von 25 °C bis 200 °C durchgeführt wird.

## Revendications

1. Procédé de préparation d'esters de silane réactifs, comprenant :
la prévision d'un matériau de départ contenant un acide carboxylique ;
la réaction dudit matériau de départ contenant un acide carboxylique avec une base solide pour former un sel, dans lequel ladite base a la formule générale MOR, dans laquelle O est l'oxygène, M est un atome de métal choisi parmi le groupe consistant en le potassium, le sodium, le lithium, le calcium et le magnésium, et R est l'hydrogène ou un groupe alkyle linéaire ou ramifié choisi parmi le groupe consistant en des groupes éthyle, propyle, butyle, pentyle, hexyle, heptyle, octyle, nonyle et décyle ; et
la réaction dudit sel avec un halogéno-alkylène-silane pour former un composé d'ester de silane réactif.

2. Procédé selon la revendication 1, dans lequel le matériau de départ contenant un acide carboxylique est de la formule 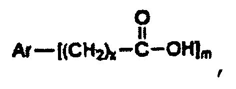 l'halogéno-alkylène-silane est de la formule Y-L-SiRₙ(OR)₃₋ₙ, et le composé d'ester de silane réactif est de la formule 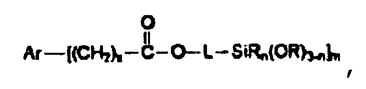 dans lesquelles :
Ar représente un groupe aromatique ;
Y représente un atome d'halogène choisi parmi le groupe consistant en I, Br, Cl et F ;
L représente un groupe de liaison divalent ;
chaque R représente indépendamment un atome d'hydrogène, un groupe alkyle, ou un groupe aryle ;
n est un entier de 0 à 2 ;
x est un entier de 0 à 25 ; et
m est un entier de 1 à 5.

3. Procédé selon la revendication 2, dans lequel le matériau de départ contenant un acide carboxylique est une arylamine de la formule : 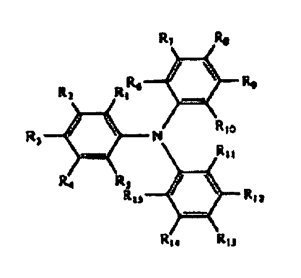 dans laquelle R¹-R¹⁵, qui peuvent être identiques ou différents, sont choisis parmi le groupe consistant en l'hydrogène, un halogène, un groupe alkyle, un groupe aryle facultativement substitué par un ou plusieurs groupes alkyle, un groupe alkyle contenant un hétéroatome, et un groupe aryle contenant un hétéroatome et facultativement substitué par un ou plusieurs groupes alkyle, sous réserve qu'au moins un de R¹-R¹⁵ est substitué par au moins un groupe acide carboxylique ou un groupe alkyle avec un groupe carboxylique lié.

4. Procédé selon la revendication 1, dans lequel le matériau de départ contenant un acide carboxylique est de la formule : 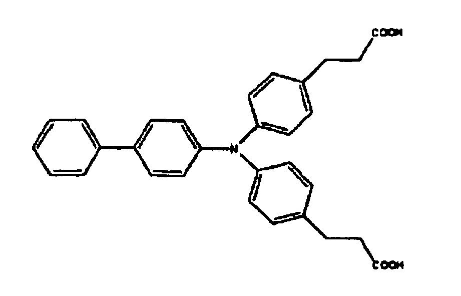 et le composé d'ester de silane réactif est de la formule :

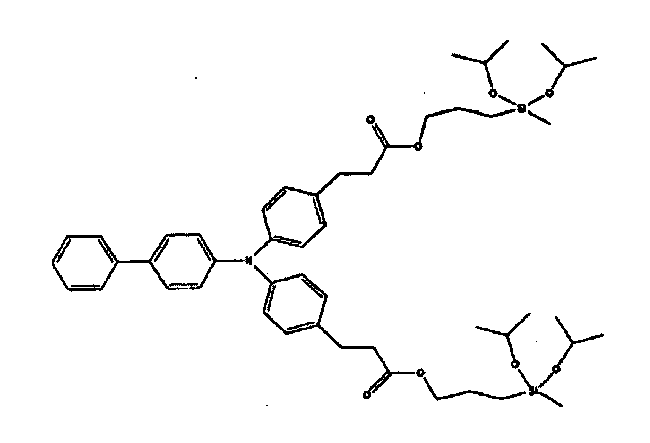

5. Procédé selon la revendication 1, dans lequel ledit matériau de départ contenant un acide carboxylique et ladite base sont fait réagir dans des quantités sensiblement équivalentes sur la base d'un nombre de groupes acide carboxylique présents dans le matériau de départ.

6. Procédé selon la revendication 1, dans lequel ladite réaction dudit matériau de départ contenant un acide carboxylique avec ladite base pour former ledit sel aromatique est conduite en présence d'un premier solvant.

7. Procédé selon la revendication 1, dans lequel ladite réaction dudit matériau de départ contenant un acide carboxylique avec ladite base pour former ledit sel est conduite à une température d'entre 0°C à 100°C.

8. Procédé selon la revendication 1, dans lequel ladite réaction dudit sel avec ledit halogéno-alkylène-silane pour former ledit composé d'ester de silane réactif est conduite en présence d'un deuxième solvant.

9. Procédé selon la revendication 1, dans lequel ladite réaction dudit sel avec ledit halogéno-alkylène-silane pour former ledit composé d'ester de silane réactif est conduite à une température d'entre 25°C à 200°C.
